# EUROPEAN PATENT SPECIFICATION

(11) **EP 0 866 249 B1**
(45) Date of publication and mention of the grant of the patent: **17.09.2003**
(21) Application number: 98104821.8
(22) Date of filing: 17.03.1998
(51) Int. Cl.: F16J 15/32

(54) **A multiple contact seal assembly for mechanical members coupled for relative rotation**
Mehrfachkontaktdichtung für mechanische Teile
Joint à contacts multiples pour organes mécaniques

(30) Priority: 18.03.1997 IT TO970226
(43) Date of publication of application: 23.09.1998
(73) Proprietor: SKF INDUSTRIE S.p.A., I-10128 Torino (IT)
(72) Inventor: Vignotto, Angelo, 10100 Torino (IT); Visconti, Alberto, 21100 Varese (IT)
(74) Representative: Cerbaro, Elena, Dr.

(56) References cited:
- EP-A- 0 458 123
- EP-A- 0 807 775
- GB-A- 2 130 310
- US-A- 4 906 009

## Description

The present invention relates to a multiple contact seal assembly for two mechanical members coupled for relative rotary motion, such as, for example, two rings of a rolling element bearing.

In the prior art various different types of seal assemblies for members coupled for relative rotation are known: in particular, seal assemblies having all the features of the preamble portion of claim 1 are known from e.g. US-A-4906009 and GB-A-2130310, comprising two rigid screens respectively fixed to each of the two members coupled for relative rotation, at least one of the screens being provided with an annular seal element constituted by two lips defining between them an annular cavity and cooperating slidingly with the opposite screen.

The sealing action is guaranteed by the elastic deformation of the lips mounted so as to be an interference fit with the opposite screen; in such cases this deformation cannot be sufficient to ensure an effective seal in all conditions of use, and in particular if the seal assembly is not assembled entirely correctly: in this case it is known to make use of springs, for example coil springs, which maintain the seal elements forced into the correct position; these springs are normally fitted in suitable grooves formed in the seal element itself.

Although widely used, the above described arrangements are not free from disadvantages.

In particular multiple lip seal assemblies suffer from the main disadvantage of being difficult to produce, above all because they require complex moulds and are consequently of relatively high cost.

As indicated above, moreover, an effective seal is guaranteed only if they are assembled correctly, not being able, except in a small measure, to adapt themselves to an incorrect positioning of the coupled parts: in particular they guarantee the seal effectively only within a limited margin of axial displacement.

The presence of a spring to guarantee contact of the sealing lip against the corresponding screen has, moreover, the risk of separation of the spring itself during assembly or in use, with consequent loss of seal and/or damage of the sliding lips. The presence of the spring furthermore reduces the space available for the lips themselves.

The object of the present invention is that of providing a seal assembly for members coupled for relative rotation which will be free from the above described disadvantages of known assemblies, and in particular which will be provided with a seal element shaped in such a way as to allow, even without springs, a correct operation in all possible conditions of use, including the most critical conditions due to incorrect assembly or positioning, and at the same time being easy and economical to produce.

In accordance with the predefined object there is provided a seal assembly for two mechanical members coupled for relative rotation, comprising first and second substantially rigid screens respectively mounted fixedly on a first and a second of the said coupled members, the said first screen being provided with a first annular seal element which can cooperate slidingly with the said second screen, the said second screen including a cylindrical portion integrally joined to a radial flange, characterised in that the said first annular seal element is shaped in such a way as to comprise a first annular lip which can cooperate slidingly with the said second screen and a second annular sealing lip projecting from the said first lip and able to cooperate slidingly with the said second screen independently of the said first lip.

In particular, the said first annular sealing lip is able to cooperate slidingly with the said cylindrical portion of the said second screen, whilst the said second annular sealing lip can cooperate slidingly with the said radial flange of the said second screen.

The first annular sealing lip extends obliquely and projects from a flexible attachment portion which connects the said first annular seal element to the said first screen, and has a substantially V-shape in radial section with the vertex facing the said cylindrical portion of the second screen; the second sealing lip extends obliquely and projects from a free end of the said first sealing lip on the opposite side from the said flexible attachment portion and is connected to the said first sealing lip by means of a first narrow annular section.

The second sealing lip is moreover shaped in such a way as to comprise a plurality of sealing portions able to cooperate slidingly with the said radial flange of the said second screen independently of one another.

Preferably, the said second sealing lip comprises a first and a second sealing portion, the said second sealing portion extending from the said first sealing portion on the opposite side from the said first sealing lip and being connected to the said first sealing portion by means of a second narrow annular section.

The first narrow annular section has an area less than that of a section of the said first sealing lip measured at a contact profile between the said first sealing portion and the said cylindrical portion of the said second screen and less than a section of the said first sealing portion measured at a contact profile between the said first sealing portion and the said radial flange of the second screen.

Moreover, the said second narrow annular section has an area less than that of the said first narrow annular section.

In a preferred embodiment the second sealing portion of the second lip is constituted by a free end of this latter defined between two converging annular faces, the vertex angle delimited between the said two converging faces being less than 90°.

Preferably, the first annular seal element is shaped in such a way as further to include, between the first annular narrow section and that part of the said first sealing lip corresponding to the contact profile thereof with the said flange of the second screen, at least one annular spur extending in a substantially axial direction and having a substantially triangular form in radial section.

In this way the seal assembly according to the present invention maintains full effectiveness in all conditions of use, even in the case of incorrect positioning or assembly: in particular, the seal assembly of the invention is able to adapt itself, without loss of efficiency, even to relatively large relative axial displacements of the coupled members. The first (or main) sealing lip is in fact designed in such a way as to be maintained in a correct position by a predetermined radial interference upon assembly: possible axial deformations of the second sealing lip upon assembly or in use have no effect on the main lip the two lips being able to deform independently of one another thanks to the said annular narrow sections.

Moreover, the main sealing lip is of such a length as always to guarantee an effective seal without requiring the use of springs or other force devices; the seal assembly according to the invention is therefore simple and economic to produce.

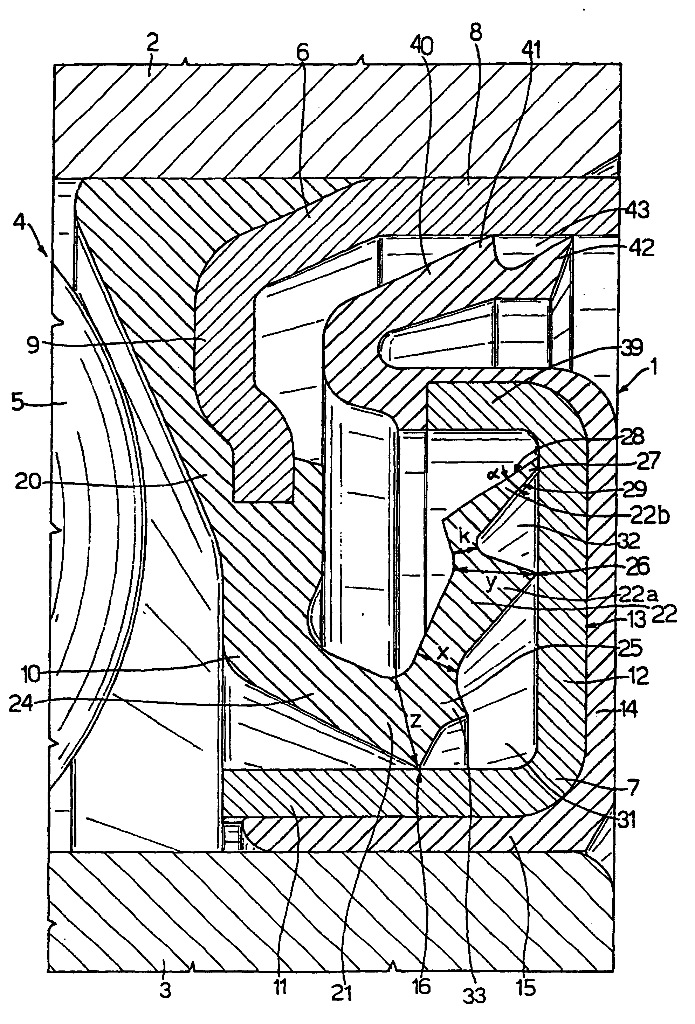

A non-limitative embodiment of the present invention will now be further described in the following, with reference to the attached figure which represents a radial section of a sealing assembly formed according to the invention.

With reference to the attached drawing, the reference numeral 1 indicates a sealing assembly formed according to the present invention, of the type intended for the protection of the kinematic coupling surfaces of two mechanical members in relative rotation; in the specific example the two rotating members are constituted by two rings 2, 3 of a rolling element bearing 4, in particular a ball bearing having balls 5: obviously, the following description is valid for any pair of members mechanically coupled for relative rotation.

In the following description, without limiting the scope of the invention to the specific case, the outer ring 2 will be considered as fixed whilst the inner ring 3 is rotatable.

The assembly 1 includes two substantially rigid screens 6 and 7, constituted for example by respective metal reinforcements fixed respectively to the two members coupled for relative rotary motion, that is to say to the rings 2 and 3: the screen 6 is therefore stationary, being fixed to the ring 2, whilst the screen 7 is able to rotate together with the inner ring 3.

The screen 6 includes a cylindrical portion 8 fixed directly onto the outer ring 2, and a radial flange portion 9 which supports a first sealing element 10 formed of elastomeric material, moulded and fixed by adhesive in a vulcanisation phase.

The second screen 7 is fixedly mounted to the inner ring 3, in the specific example the rotating member: the second screen 7 also includes a cylindrical portion 11 and a radial flange 12, the cylindrical portion 11 being coupled to the inner ring 3 of the bearing 4. The screen 7 is clad on its outer lateral surface 13, that is to say the surface facing away from the balls 5 of the bearing 4, with a layer 14 of elastomeric material; in particular, a portion 15 of this elastomeric layer 14 extends over the coupling surface of the cylindrical portion 11 the inner ring 3 in such a way that the cylindrical portion 11 of the screen 7 is mounted interferingly on the inner ring 3 with the interposition of the layer 14 of elastomeric material for the purpose of facilitating assembly thereof.

The annular sealing element 10 is shaped in such a way as to comprise, in succession starting from its attachment portion 20 to the screen 6, a first annular sealing lip 21 and a second sealing lip 22 projecting from the first lip 21, both able to cooperate slidingly with the second screen 7 simultaneously and on different portions from one another.

The first sealing lip 21, having a radial sealing action, projects obliquely from the attachment portion 20 and has a substantially asymmetric V-shape in radial section, with the vertex, defined by an annular corner 16, facing towards the cylindrical portion 11 of the screen 7; in radial section a major arm 24 of the V-shape lip 21 extends from the said attachment portion 20, whilst a minor arm 25, opposite the previous one, constitutes a free end of the lip 21 itself.

In correspondence with the annular corner 16 constituting the vertex of the V-shape lip 21, this latter has a section z which, in radial section is inclined with respect to the axis of the annular element 10.

The lip 21, in use, is mounted forcibly onto the cylindrical portion 11 of the second screen 7, with which it cooperates slidingly along an annular contact profile in correspondence with the section z. The first sealing lip 21 extends axially beyond the midline of the cylindrical portion 11 of the screen 7; the contact profile between the sealing lip 21 and the cylindrical portion 11 is therefore located more than half way along this cylindrical portion 11 nearer the flange 12.

The second sealing lip 22, which has an axial sealing action, projects obliquely from the free end 25 of the sealing lip 21, on the side opposite the attachment portion 20.

The second sealing lip 22 is connected to the first sealing lip 21 by means of a narrow annular section x which, as will be explained more clearer hereinafter, allows independent relative deformation of the two lips 21, 22 in use.

The second lip 22 includes, starting from the narrow attachment section x to the first lip 21, a first seal portion 22a and a second seal portion 22b, both having an axial sealing action and being able in use to cooperate slidingly, and simultaneously, with the radial flange 12 of the screen 7 on radially different portions thereof.

The first seal portion 22a of the lip 22 remote from the lip 21 ends with an annular section y at an annular corner 26; the portion 22b extends from the portion 22a on the side remote from the narrow annular section x and is constituted in practice by a free end 27 of the lip 22 defined between two converging faces 28, 29. The free end 27 of the lip 22 has a tapering profile and the vertex angle α delimited between the two converging faces 28, 29 is less than 90°.

A narrow annular section k is, moreover, formed between the seal portions 22a and 22b.

In use, the sealing lip 22 is maintained pressed against the radial flange 12 of the screen 7 by the elastic deformation imposed by a suitable axial positioning of the screen 7 when the seal assembly 1 is assembled; in this way both the seal portions 22a, 22b of the lip 22 cooperate slidingly with the flange 12 along respective annular contact profiles at the annular corner 26 and the free end 27.

The annular seal element 10 is also shaped in such a way as to include, between the section z of the first lip 21 and the narrow annular section x, at least one annular spur 33 which extends in a substantially axial direction and has a substantially triangular form in radial section.

The lip 21 and the two seal portions 22a and 22b of the lip 22 delimit, in use, together with the screen 7, two annular cavities 31, 32: in detail, the annular cavity 31 is delimited between the lip 21 and the portion 22a, whilst the annular cavity 32 is delimited between the portions 22a and 23b of the lip 22.

The narrow annular section x has a smaller area than that of the section z, that is to say than the section of the first sealing lip 21 measured at the contact profile between this latter and the cylindrical portion 11 of the second screen 7; the narrow section x also has a smaller area than a section y of the portion 22a of the second lip 22 measured at the contact profile between this portion 22a and the radial flange 12 of the second screen 7.

Furthermore, the narrow annular section k has a smaller area than the narrow annular section x.

In a preferred embodiment, the layer 14 of elastomeric material which covers the screen 7 extends beyond a free end 39 of the radial flange 12 to provide a further radial sealing lip 40 sliding with predetermined interference on an inner cylindrical surface of the first screen 6: in particular, the sealing lip 40 in turn comprises two annular projections 41, 42 axially separated by an annular cavity 43; in use, by the effect of the relative rotation between the two projections 41, 42 and the corresponding sliding surface, there is created within the cavity 43 an air vortex which generates an additional sealing effect of dynamic type.

The first seal element 10 is designed in such a way that when the sealing assembly 1 according to the invention is assembled, the lip 21 contacts the cylindrical portion 11 of the screen 7 as already indicated, with predetermined radial interference: the radial seal action is ensured by the elastic deformation of the lip 21, or rather by its flexure with respect to the attachment portion 20.

During assembly of the sealing assembly 1 the axial position of the screen 7 also causes elastic deformation of the lip 22, which deformation ensures its axial sealing function.

As opposed to known seal assemblies, however, the seal assembly 1 according to the invention remains fully effective over a relatively wide range of axial positions assumed by the screen 7: in fact, thanks to the presence of the narrow section x the lip 22 can adapt to positions of the associated opposing element, in the specific example the screen 7, independently of the lip 21: in substance, when during assembly the screen 7 is moved in an axial direction only the lip 22 is deformed, which flexes with respect to the lip 21 thanks to the narrow section x, whilst the lip 21 is not in practice subjected to further deformations.

In this way the radial effectiveness of the lip 21 is not detrimentally influenced by a possible adaptation in an axial sense of the lip 22.

Similarly, the presence of the narrow section k (the thickness of which is less than that of the section x) between the portion 22a and the portion 22b of the lip 22 makes the deformation of this latter independent from the seal element 10.

The tapered profile of the seal portion 22b, moreover, causes in use an effect of dynamic nature which contributes to avoiding the penetration of external agents (for example fine dust) into the innermost parts of the seal, which could be damaged thereby.

The spur 33 is formed on the seal element 10 for the purpose of preventing possible defects (burrs) from forming during the moulding phase close to the contact profiles between the sealing lips 21, 22 and the screen 7 where they could cause a reduction in efficiency.

The spur 33 is in fact formed in such a way as to be located at the junction section between the two half moulds with which the seal element 10 is formed: in this way, possible burrs which project from the mould are concentrated at the spur 33 and therefore, when the sealing assembly 1 is assembled, do not give rise to sealing discontinuity.

All or some of the annular cavities defined by the sealing lips can be filled, in a known way, with an appropriate type of lubricating grease for the purpose of retaining possible impurities and to lubricate and cool the sliding regions between the lips themselves and the correspondence contact surfaces.

Finally, it is clear that the sealing assembly according to the invention can have further modifications and variations within the scope of protection defined by the appendent claims.

## Claims

1. A seal assembly (1) for two mechanical members (2, 3) coupled for relative rotation, comprising first and second substantially rigid screens (6, 7) respectively mounted fixedly on said first and second coupled members (2, 3) the said first screen (6) being provided with a first annular seal element (10) able to cooperate slidingly with the said second screen (7), the said second screen (7) comprising a cylindrical portion (11) joined integrally to a radial flange (12), wherein the said first annular seal element (10) is shaped in such a way as to comprise a first annular sealing lip (21) able to cooperate slidingly with the said second screen (7) and a second annular sealing lip (22) projecting from the said first lip (21) and able to cooperate slidingly with the said second screen (7) independently of the said first lip (21); and wherein the said first annular sealing lip (21) is able to cooperate slidingly with the said cylindrical portion (11) of the said second screen (7) and the said second annular sealing lip (22) is able to cooperate slidingly with the said radial flange (12) of the said second screen (7); the said first annular sealing lip (21) projecting obliquely from a flexible attachment portion (20) by which the said first annular seal element (10) is attached to the said first screen (6); **characterized in that** said first annular seal element (10) has a substantially V-shape in radial section with the vertex facing towards the said cylindrical portion (11) of the said second screen (7); the said second sealing lip (22) projecting obliquely from a free end (25) of the said first sealing lip (21) on the side thereof opposite the said flexible attachment portion (20) and being connected to the said first sealing lip (21) by means of a first narrow annular section (x).

2. A sealing assembly according to Claim 1, **characterized in that** the said second sealing lip (22) is shaped in such a way as to comprise a plurality of sealing portions (22a, 22b) able to cooperate slidingly with the said radial flange (12) of the said second screen (7) independently of one another.

3. A sealing assembly according to Claim 2, **characterized in that** the said second sealing lip comprises first and second sealing portions (22a, 22b), the said second sealing portion (22b) extending from the said first sealing portion (22a) on the opposite side from the said first sealing lip (21) and being connected to the said first sealing portion (22a) by means of a second narrow annular section (k).

4. A sealing assembly according to Claim 3, **characterized in that** the said first narrow annular section (x) has an area less than that of a section (z) of the said first sealing lip (21) measured at a contact. profile between the said first sealing lip (21) and the said cylindrical portion (11) of the said second screen (7), and less than a section (y) of the said first sealing portion (22a) of the said second lip (22) measured at a contact profile between the said first sealing portion and (22a) and the said radial flange (12) of the said second screen (7).

5. A sealing assembly according to Claim 4, **characterized in that** the said first annular seal element (10) is shaped in such a away as further to comprise, between the said first narrow annular section (x) and the said section (z) of the first sealing lip (21) corresponding to the contact profile thereof with the said flange (12) of the second screen (7), at least one annular spur (33) extending in a substantially axial direction and having a substantially triangular shape in radial section.

6. The sealing assembly according to any of Claims from 3 to 5, **characterized in that** the said second narrow annular section (k) has a smaller area than the said first narrow annular section (x).

7. A sealing assembly according to any of Claims from 3 to 6, **characterized in that** the said second seal portion (22b) is constituted by a free end (26) of the said second annular sealing lip (22) defined between two converging annular faces (27, 28) the vertex angle (α) delimited between the said two converging faces (27, 28) being less than 90°.

8. A sealing assembly according to any preceding claim, **characterized in that** the said second screen (7) is clad with a layer (14) of elastomeric material, the said cylindrical portion (11) of the said second screen (7) being mountable interferingly on the said second member (3) with the interposition of the said layer (14) of elastomeric material; the said second screen (7) being further provided with a third annular sealing lip (40) able to cooperate slidingly with the said first screen (6).

## Patentansprüche

1. Dichtanordnung (1) für zwei zur relativen Rotation gekoppelte mechanische Eleme (2, 3), umfassend erste und zweite im wesentliche starre Schirme (6, 7), die jeweils fest an den ersten und zweiten gekoppelten Elementen (2, 3) angebracht sind, wobei der erste Schirm (6) mit einem ersten ringförmigen Dichtelement (10) versehen ist, welches zum gleitenden Zusammenwirken mit dem zweiten Schirm (7) in der Lage ist, und der zweite Schirm (7) einen zylindrischen Bereich (11) umfasst, der integral mit einem radialen Flansch (12) verbunden ist, wobei das erste ringförmige Dichtelement (10) derart geformt ist, dass es eine erste ringförmige Dichtlippe (21), die zum gleitenden Zusammenwirken mit dem zweiten Schirm (7) inder Lage ist, und eine zweite ringförmige Dichtlippe (22), die von der ersten Dichtlippe (21) vorragt und zum gleitenden Zusammenwirken mit dem zweiten Schirm (7) unabhängig von der ersten Lippe (21) in der Lage ist, umfasst, und wobei die erste ringförmige Dichtlippe (21) zum gleitenden Zusammenwirken mit dem zylindrischen Bereich (11) des zweiten Schirms. (7) in der Lage ist und die zweite ringförmige Dichtlippe (22) zum gleitenden Zusammenwirken mit dem Radialflansch (12) des zweiten Schirms (7) in der Lage ist, die erste ringförmige Dichtlippe (21) schräg von einem flexiblen Befestigungsbereich (20) vorragt, durch den das erste ringförmige Dichtelement (10) am ersten Schirm (6) angebracht ist, **dadurch gekennzeichnet, dass** das erste ringförmige Dichtelement (10) im wesentlichen im radialen Querschnitt eine V-Form aufweist, wobei der Scheitelpunkt zum zylindrischen Bereich (11) des zweiten Schirms (7) weist; die zweite Dichtlippe (22) schräg von einem freien Ende (25) der ersten Dichtlippe (21) auf der Seite von ihr, die gegenüber dem flexiblen Befestigungsbereich (20) liegt, vorragt und mit der ersten Dichtlippe (21) mittels eines ersten schmalen ringförmigen Abschnitts (x) verbunden ist.

2. Dichtanordnung gemäß Anspruch 1, **dadurch gekennzeichnet, dass** die zweite Dichtlippe (22) derart geformt ist, dass sie eine Mehrzahl von Dichtbereichen (22a, 22b) umfasst, die unabhängig voneinander zum gleitenden Zusammenwirken mit dem radialen Flansch (12) des zweiten Schirms (7) in der Lage sind.

3. Dichtanordnung gemäß Anspruch 2, **dadurch gekennzeichnet, dass** die zweite Dichtlippe erste und zweite Dichtbereiche (22a, 22b) umfasst, wobei sich der zweite Dichtbereich (22b) vom ersten Dichtbereich (22a) auf der gegenüberliegenden Seite von der ersten Dichtlippe (21) erstreckt und mit dem ersten Dichtbereich (22a) mittels eines zweiten engen ringförmigen Abschnitts (k) verbunden ist.

4. Dichtanordnung gemäß Anspruch 3, **dadurch gekennzeichnet, dass** der erste schmale ringförmige Abschnitt (x) eine kleinere Fläche als ein Abschnitt (z) auf der ersten Dichtlippe (21) hat, gemessen an einem Kontaktprofil zwischen der ersten Dichtlippe (21) und dem zylindrischen Bereich (11) des zweiten Schirms (7), und kleiner als ein Abschnitt (y) auf dem ersten Dichtbereich (22a) der zweiten Lippe (22), gemessen an einem Kontaktprofil zwischen dem ersten Dichtbereich (22a) und dem radialen Flansch (12) des zweiten Schirms (7).

5. Dichtanordnung gemäß Anspruch 4, **dadurch gekennzeichnet, dass** das erste ringförmige Dichtelement (10) derart geformt ist, dass es weiterhin zwischen dem ersten engen ringförmigen Abschnitt (x) und dem Abschnitt (z) der ersten Dichtlippe (21), entsprechend einem Kontaktprofil davon mit dem Flansch (12) des zweiten Schirms (7) zumindest einen ringförmigen Ausläufer (33) umfasst, der sich in einer im wesentlichen axialen Richtung erstreckt und im wesentlichen eine dreieckige Form im Radialquerschnitt aufweist.

6. Dichtanordnung gemäß einem der Ansprüche 3 bis 5, **dadurch gekennzeichnet, dass** der zweite enge ringförmige Abschnitt (k) einen kleineren Bereich als der erste enge ringförmige Abschnitt (x) aufweist.

7. Dichtanordnung gemäß einem der Ansprüche 3 bis 6, **dadurch gekennzeichnet, dass** der zweite Dichtbereich (22b) aus einem freien Ende (26) der zweiten ringförmigen Dichtlippe (22) besteht, das zwischen zwei konvergierenden ringförmigen Flächen (27, 28) umgrenzt ist, wobei der Scheitelwinkel (α), der von den zwei konvergierenden Flächen (27, 28) begrenzt ist, kleiner als 90° ist.

8. Dichtanordnung gemäß einem der vorstehenden Ansprüche, **dadurch gekennzeichnet, dass** der zweite Schirm (7) mit einer Schicht (14) aus elastomerem Material plattiert ist, wobei der zylindrische Bereich (11) des zweiten Schirms (7) interferierend auf dem zweiten Element (3) anbringbar ist, wobei die Schicht (14) aus elastomerem Material zwischengefügt ist; und der zweite Schirm (7) weiterhin mit einer dritten ringförmigen Dichtlippe (40) versehen ist, die zum gleitenden Zusammenwirken mit dem ersten Schirm (6) in der Lage ist.

## Revendications

1. Ensemble d'étanchéité (1) pour deux organes mécaniques (2, 3) accouplés en vue d'une rotation relative, comprenant un premier et un deuxième écran sensiblement rigide (6, 7) respectivement montés de manière fixe sur lesdits premier et deuxième organes accouplés (2, 3) ledit premier écran (6) étant muni d'un premier élément d'étanchéité annulaire (10) apte à coopérer à coulissement avec ledit deuxième écran (7), ledit deuxième écran (7) comprenant une partie cylindrique (11) liée d'un seul tenant à une bride radiale (12), dans lequel ledit premier élément d'étanchéité annulaire (10) est formé de manière à comprendre une première lèvre d'étanchéité annulaire (21) apte à coopérer à coulissement avec ledit deuxième écran (7) et une deuxième lèvre d'étanchéité annulaire (22) faisant saillie depuis ladite première lèvre (21) et apte à coopérer à coulissement avec ledit deuxième écran (7) indépendamment de ladite première lèvre (21), et où ladite première lèvre d'étanchéité annulaire (21) est apte à coopérer à coulissement avec ladite partie cylindrique (11) dudit deuxième écran (7) et ladite deuxième lèvre d'étanchéité annulaire (22) est apte à coopérer à coulissement avec ladite bride radiale (12) dudit deuxième écran (7), ladite première lèvre d'étanchéité annulaire (21) faisant saillie en oblique depuis une partie de fixation souple (20) par laquelle ledit premier élément d'étanchéité annulaire (10) est rattaché audit premier écran (6), **caractérisé en ce que** ledit premier élément d'étanchéité annulaire (10) a une forme sensiblement en V en section radiale avec le sommet faisant face à ladite partie cylindrique (11) dudit deuxième écran (7), ladite deuxième lèvre d'étanchéité annulaire (22) faisant saillie en oblique depuis une extrémité libre (25) de ladite première lèvre d'étanchéité annulaire (21) sur le côté de celle-ci opposé à ladite partie de fixation souple (20) et étant connectée à ladite première lèvre d'étanchéité (21) au moyen d'une première portion annulaire étroitè (x).

2. Ensemble d'étanchéité selon la revendication 1, **caractérisé en ce que** ladite deuxième lèvre d'étanchéité (22) est formée de manière à comprendre une pluralité de parties d'étanchéité (22a, 22b) aptes à coopérer à coulissement avec ladite bride radiale (12) dudit deuxième écran (7) indépendamment les unes des autres.

3. Ensemble d'étanchéité selon la revendication 2, **caractérisé en ce que** ladite deuxième lèvre d'étanchéité comprend une première et une deuxième partie d'étanchéité (22a, 22b), ladite deuxième partie d'étanchéité (22b) s'étendant depuis ladite première partie d'étanchéité (22a) sur le côté opposé depuis ladite première lèvre d'étanchéité (21) et étant connectée à ladite première partie d'étanchéité (22a) au moyen d'une deuxième portion annulaire étroite (k).

4. Ensemble d'étanchéité selon la revendication 3, **caractérisé en ce que** ladite première portion annulaire étroite (x) a une aire inférieure à celle d'une portion (z) de ladite première lèvre d'étanchéité (21) mesurée au niveau d'un profil de contact entre ladite première lèvre d'étanchéité (21) et ladite partie cylindrique (11) dudit deuxième écran (7), et inférieure à celle d'une portion (y) de ladite première partie d'étanchéité (22a) de ladite deuxième lèvre (22) mesurée au niveau d'un profil de contact entre ladite première partie d'étanchéité (22a) et ladite bride radiale (12) dudit deuxième écran (7).

5. Ensemble d'étanchéité selon la revendication 4, **caractérisé en ce que** ledit premier élément d'étanchéité annulaire (10) est formé de manière à comprendre en. outre, entre ladite première portion annulaire étroite (x) et ladite portion (z) de la première lèvre d'étanchéité (21) correspondant au profil de contact de celle-ci avec ladite bride (12) du deuxième écran (7), au moins une saillie annulaire (33) s'étendant dans une direction sensiblement axiale et ayant une forme sensiblement triangulaire en section radiale.

6. Ensemble d'étanchéité selon l'une quelconque des revendications 3 à 5, **caractérisé en ce que** ladite deuxième portion annulaire étroite (k) a une aire inférieure à celle de ladite première portion annulaire étroite (x).

7. Ensemble d'étanchéité selon l'une quelconque des revendications 3 à 6, **caractérisé en ce que** ladite deuxième partie d'étanchéité (22b) est constituée par une extrémité libre (26) de ladite deuxième lèvre d'étanchéité annulaire (22) définie entre deux faces annulaires convergentes (27, 28), l'angle au sommet (α) délimité par lesdites deux faces convergentes (27, 28) étant inférieur à 90°.

8. Ensemble d'étanchéité selon l'une quelconque des revendications précédentes, **caractérisé en ce que** ledit deuxième écran (7) est enrobé d'une couche (14) de matériau élastomère, ladite partie cylindrique (11) dudit deuxième écran (7) pouvant être montée avec interférence sur ledit deuxième organe (3) avec l'interposition de ladite couche (14) de matériau élastomère, ledit deuxième écran (7) étant en outre muni d'une troisième lèvre d'étanchéité annulaire (40) apte à coopérer à coulissement avec ledit premier écran (6).
